# EUROPÄISCHE PATENTANMELDUNG

(11) **EP 1 176 513 A2**
(43) Veröffentlichungstag der Anmeldung: **30.01.2002**
(21) Anmeldenummer: 01115531.4
(22) Anmeldetag: 28.06.2001
(51) Int. Cl.: G06F 13/16

(54) **Verfahren und Vorrichtung zum Bearbeiten von Daten in einem Speicher**

(30) Priorität: 21.07.2000 DE 10035635
(71) Anmelder: Infineon Technologies AG, 81669 München (DE)
(72) Erfinder: Benedix, Alexander, 81735 München (DE); Braun, Georg, 80339 München (DE); Klehn, Bernd, 81539 München (DE)
(74) Vertreter: Patentanwaltskanzlei WILHELM & BECK

(57) **Zusammenfassung**

Es wird ein Verfahren und eine Vorrichtung zum Bearbeiten von Daten in einem Speicher beschrieben, bei dem verschiedene Zugriffsstrategien vorgegeben sind. Parallel zur Abarbeitung einer Aufgabe nach einer ersten Zugriffsstrategie wird die Zeit berechnet, die für die Abarbeitung der Aufgabe nach einer zweiten Zugriffsstrategie benötigt würde. Ist die zweite Zugriffsstrategie schneller als die erste Zugriffsstrategie, so wird zukünftig die zweite Zugriffsstrategie zur Abarbeitung der Aufgabe verwendet. Auf diese Weise wird ein schneller Datenzugriff angepasst an verschiedene Aufgaben erreicht.

## Beschreibung

Die Erfindung betrifft ein Verfahren gemäß dem Oberbegriff des Patentanspruchs 1 und eine Vorrichtung gemäß dem Oberbegriffs des Patentanspruchs 9.

Daten werden von einem Speichercontroller über eine vorgegebene Zugriffsstrategie aus einem Speicher ausgelesen. Bei einem matrixförmig aufgebauten Halbleiterspeicher ist die Zugriffsstrategie beispielsweise durch eine Verdrahtung oder fest programmierte Register in der Weise festgelegt, dass nach dem Einschreiben oder Auslesen eines Datums die Zugriffsleitung auf eine Spalte des Speichers angesteuert bleibt und erst nach einem Wechsel der zu bearbeitenden Spalte die Zugriffsleitung nicht mehr angesteuert wird und anschließend die Zugriffsleitung der neu auszulesenden Spalte bestromt wird. Somit ist der Speichercontroller auf eine Zugriffsstrategie festgelegt.

Die Aufgabe der Erfindung besteht darin, ein flexibleres Verfahren und eine flexiblere Vorrichtung zum Bearbeiten von Daten in einem Speicher bereitzustellen.

Die Aufgabe der Erfindung wird durch das Verfahren mit den Merkmalen des Anspruchs 1 und durch die Vorrichtung mit den Merkmalen des Anspruchs 9 gelöst.

Ein Vorteil der Erfindung besteht darin, dass die Bearbeitung von Daten im Speicher mit einer zweiten Zugriffsstrategie Überprüft wird und die Zugriffsstrategie für eine weitere Bearbeitung von Daten im Speicher verwendet wird, mit der die Daten besser, vorzugsweise schneller bearbeitet werden.

Dabei wird die zweite Zugriffsstrategie in Echtzeit mit der ersten Zugriffsstrategie emuliert und auf diese Weise ein präziser Vergleich zwischen der ersten und der zweiten Zugriffsstrategie erhalten.

Weitere vorteilhafte Ausführungsformen der Erfindung sind in den abhängigen Ansprüchen gekennzeichnet.

In einer weiteren bevorzugten Ausführungsform wird die als langsamer erkannte Zugriffsstrategie in eine Tabelle eingeschrieben, wobei die in der Tabelle aufgeführten Zugriffsstrategien nicht für einen weiteren Vergleich verwendet werden.

Vorzugsweise werden in vorgebbaren Zeitpunkten eine neue Zugriffsstrategie aus einem Speicher ausgelesen und als neue zweite Zugriffsstrategie getestet. Auf diese Weise wird erreicht, dass eine laufende Anpassung an eine optimale Zugriffsstrategie ermöglicht wird.

In einer bevorzugten Ausführungsform ist ein zweites Steuergerät vorgesehen, das mit einem Speichercontroller in Verbindung steht, der die Bearbeitung der Daten im Speicher steuert. Die zweite Steuereinheit emuliert eine Bearbeitung der Daten im Speicher nach einer zweiten Zugriffsstrategie. Durch die Verwendung einer zweiten Steuereinheit ist in vorteilhafter Weise eine Emulation der zweiten Zugriffsstrategie in Echtzeit möglich.

Die Erfindung wird im folgenden anhand der Figuren näher erläutert. Es zeigen:
Figur 1 einen schematischen Aufbau einer Recheneinheit,
Figur 2 einen Aufbau eines matrixförmigen Speichers,
Figur 3 einen Verfahrensablauf und
Figur 4 Listen eines Speichers, und
Figur 5 ein Ablaufdiagramm.

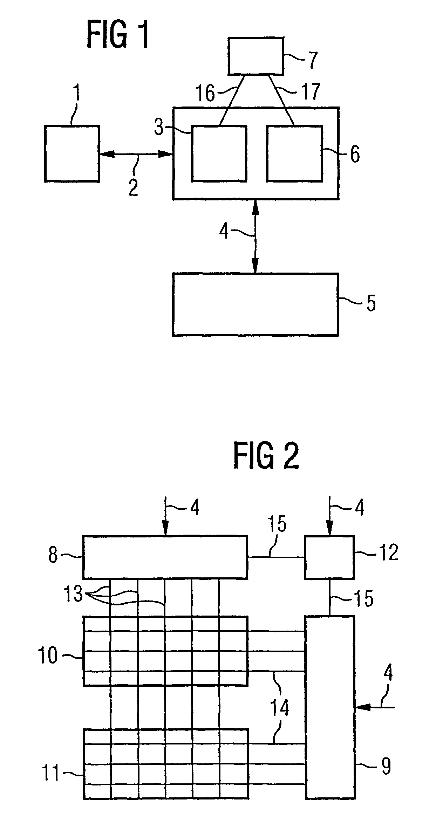

Figur 1 zeigt einen Mikroprozessor 1, der über eine erste Schnittstelle 2 mit einem Speichercontroller 3 verbunden ist. Der Speichercontroller 3 steht über eine zweite Schnittstelle 4 mit einem matrixförmigen Speicher 5 in Verbindung. Zudem ist eine Steuereinheit 6 vorgesehen, die an die zweite Schnittstelle 4 angeschlossen ist.

Weiterhin ist ein zweiter Speicher 7 vorgesehen, der mit dem Speichercontroller 3 und mit der Steuereinheit 6 über eine erste bzw. zweite Datenleitung 16, 17 in Verbindung steht.

Im zweiten Speicher 7 sind die Programmschritte abgelegt, nach denen der Speichercontroller 3 nach einer Anforderung des Mikroprozessors 1 Daten im Speicher 5 bearbeitet. Unter der Bearbeitung von Daten im Speicher 5 wird das Einschreiben von Daten, das Auslesen von Daten, ein Löschen von Daten, ein Kopieren von Daten, d. h. jegliche Bearbeitung von Daten im Speicher 5, verstanden. Weiterhin sind im zweiten Speicher 7 weitere Zugriffsstrategien zum Bearbeiten von Daten im Speicher 5 abgelegt.

Figur 2 zeigt schematisch den Aufbau des Speichers 5, mit einem Spaltendekoder 8, einem Reihendekoder 9 und Speicherbänken 10, 11. Weiterhin weist der Speicher 5 einen Bankdekoder 12 auf, der mit dem Spaltendekoder 8 und dem Reihendekoder 9 über Bankleitungen 15 verbunden ist. Der Spaltendekoder ist über Spaltenleitungen 13 mit der ersten und der zweiten Speicherbank 10, 11 verbunden. Der Reihendekoder 9 ist über Reihenleitungen 14 mit der ersten und der zweiten Speicherbank 10, 11 verbunden. Die Speicherbänke 10, 11 weisen Speicherzellen auf, die jeweils mit einer Spaltenleitung 13 und einer Reihenleitung 14 verbunden sind. Weiterhin ist der Reihendekoder 9 in der Weise ausgebildet, dass er jeweils eine erste, zweite oder dritte Reihenleitung 14 der ersten und der zweiten Speicherbank 10, 11 ansteuert. Über den Bankdekoder 12 wird festgelegt, in welcher Speicherbank eine Spaltenleitung 13 und eine Reihenleitung 14 angesteuert wird.

Die Speicherbänke 10, 11 sind beispielsweise als DRAM aufgebaut. Ein DRAM zeichnet sich dadurch aus, dass er mit einer Reihen- und einer Spaltenadresse angesteuert wird. Für einen Zugriff wird zunächst eine Reihe "geöffnet" und dann die entsprechende Spalte auf der geöffneten Reihe nach außen gegeben. Beim Öffnen einer Reihe (auch Page genannt) wird die gesamte Reihe (also alle dazugehörigen Spalten) in einen schnellen SRAM Zwischenspeicher, die sogenannten Sense Amps geschrieben. In modernen Speichern ist der Zugriff auf eine weitere Spalte der geöffneten Reihe (Page) schneller, da die Reihe nicht mehr geöffnet werden muss (Fast Page Mode). Das langsame Öffnen fällt weg. Speicherbänke sind voneinander unabhängige Speichermatrizen, d. h. gibt es in einem System mehrere Speicherbänke, so ist es in jeder Speicherbank möglich, eine beliebige Page (Reihe) zu öffnen und damit kann bei n Speicherbänken n verschiedne Pages offen gehalten werden.

Wenn ein Mikroprozessor irgend ein Datum aus einem Speicher braucht, so fordert er über seinen Systembus eine physikalische Adresse an. Diese Adresse wird bei modernen Prozessoren als komplette Adresse (z. B. 32 Bit Adresse) nicht gemultiplext. Der Speichercontroller muss nun die physikalische Adresse in einen Multiplexzugriff auf den Speicher (Bank, Reihen, Spaltenadresse) umwandeln, also typischerweise in einer Bank eine Reihe öffnen und dann die gewünschte Spalte auslesen. Bei einem weiteren Zugriff in diese Bank mit einer geöffneten Bank, gibt es zwei Möglichkeiten:
1. Die benötigte Adresse ist auf derselben Page (Page Hit), so fällt das langwierige Öffnen der Page weg und der Speicherzugriff ist sehr schnell.
2. Die benötigte Adresse ist auf einer anderen Page (Page Miss), dann muss die offene falsche Page erst geschlossen werden (Precharge Befehl beim DRAM), dann die gewünschte richtige Page geöffnet (Activats Befehl) und dann die benötigte Spalte gelesen werden (READ bzw. WRITE).

Die dritte Möglichkeit, die auftreten kann, ist die Möglichkeit, dass keine Page offen ist (Close Page Hit), dann fällt der Precharge Befehl (Schließen der Page) weg. Eine mögliche Zugriffsstrategie besteht darin, dass immer die zuletzt gelesene Page offen gelassen wird. Eine weitere Zugriffsstrategie besteht darin, dass immer die Page nach jedem Zugriff geschlossen wird. Man kann es weiter vom Adressbereich abhängig machen, ob die Page geschlossen wird oder nicht.

Im folgenden wird ein Überblick über die Funktionsweise der Anordnungen der Figuren 1 und 2 erläutert:
Bearbeitet der Mikroprozessor 1 ein Programm (eine Aufgabe oder Task), so fordert er eine Vielzahl von Daten vom Speichercontroller an. Der Speichercontroller 3 holt sich z. B. beim Start eines Programms aus dem zweiten Speicher 7 die Zugriffsstrategie, mit der die angeforderten Daten aus dem Speicher 5 ausgelesen werden. Anschließend holt der Speichercontroller 3 nach der vom zweiten Speicher 7 vorgegebenen Zugriffsstrategie das angeforderte Datum über eine entsprechende Ansteuerung des Spalten-, Zeilen- und Bankdekoders 8, 9, 12 aus der entsprechenden Speicherzelle. Anschließend gibt der Speichercontroller 3 das ausgelesene Datum über die erste Schnittstelle 2 an den Mikroprozessor 1 aus. Soll ein Datum in eine Speicherzelle des Speichers 5 eingeschrieben werden, so schreibt der Speichercontroller 3 das vom Mikroprozessor 1 vorgegebene Datum in die entsprechende Speicherzelle des Speichers 5 ein. Sowohl beim Auslesen als auch beim Einschreiben wird die vom zweiten Speicher 7 vorgegebene Zugriffsstrategie verwendet.

Die Steuereinheit 6 ist an die erste und zweite Schnittstelle 2, 4 angeschlossen. Auf diese Weise überwacht die Steuereinheit 6 den Datenaustausch des Speichercontrollers 3 mit dem Mikroprozessor 1 und mit dem Speicher 5. Auf diese Weise erfasst die Steuereinheit 6 die vom Speichercontroller 3 durchgeführte Zugriffsstrategie und erfasst zugleich die Zeit, die der Speichercontroller 3 benötigt, um Daten im Speicher 5 zu bearbeiten. Die Steuereinheit 6 speichert die vom Speichercontroller 3 benötigte Zeit zur Durchführung einer vom Mikroprozessor 1 vorgegebenen Aufgabe im zweiten Speicher 7 ab. Im zweiten Speicher 7 sind weitere Zugriffsstrategien abgelegt, mit denen Daten im Speicher 5 bearbeitet werden können. Zudem sind vorzugsweise für die verschiedenen Zugriffsstrategien und die verschiedenen Programme (Aufgabe, Tasks) die benötigten Zeiten zum Bearbeiten von Daten im Speicher 5 im zweiten Speicher 7 abgelegt. In einer bevorzugten Ausführungsform simuliert das Steuergerät 6 die Bearbeitung der Daten im Speicher 5, die der Speichercontroller 3 ausführt, mit einer zweiten Zugriffsstrategie. Das Steuergerät 6 bestimmt die Zeit, die zur Bearbeitung der Daten mit der zweiten Zugriffsstrategie benötigt wird und vergleicht diese Zeit mit der Zeit, die vom Speichercontroller 3 mit der ersten Zugriffsstrategie benötigt wird. Für die weitere Bearbeitung der Daten verwendet der Speichercontroller 3 vorzugsweise die schnellere Zugriffsstrategie.

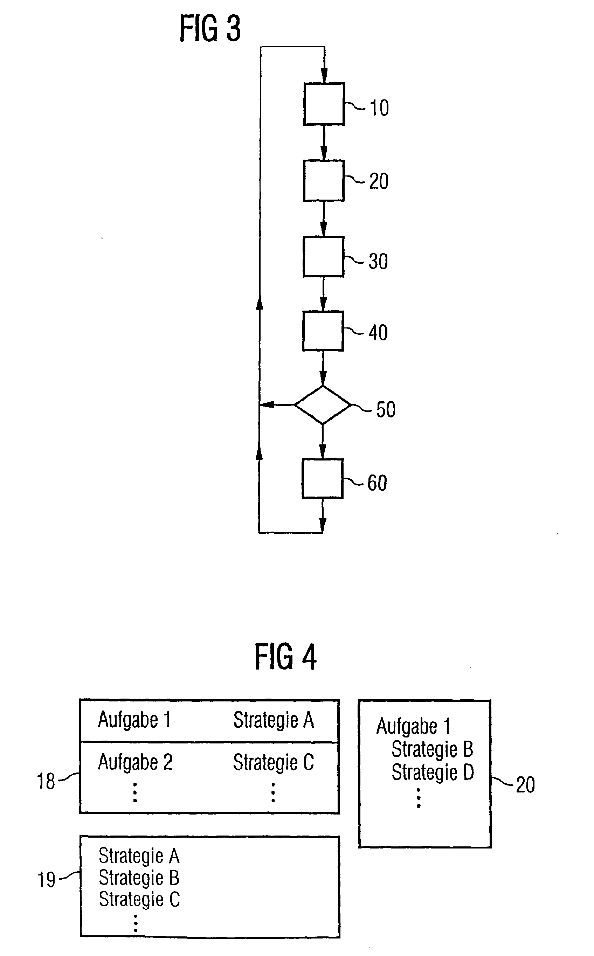

Eine detaillierte Funktionsweise der Erfindung wird anhand des Programmablaufes der Figur 3 näher erläutert. Bei Programmpunkt 10 gibt der Mikroprozessor 1 die Aufgabe an den Speichercontroller 3, ein Datum aus der Adresse a des Speichers 5 auszulesen. Der Speichercontroller 3 holt sich bei Programmpunkt 20 aus dem zweiten Speicher 7 eine für die vorgegebene Aufgabe festgelegte Zugriffsstrategie, die im folgenden als erste Zugriffsstrategie bezeichnet wird. Anschließend holt der Speichercontroller 3 während der Bearbeitung der Aufgabe bei Programmpunkt 30 nach der ersten Zugriffsstrategie die Daten aus dem Speicher 5. Dazu wandelt der Speichercontroller 3 die Adresse a des Mikroprozessors 1 in eine physikalische Adresse x₁, y₁ um. Dazu werden der Spaltendekoder 8, der Reihendekoder 9 und der Bankdekoder 12 in der durch die erste Zugriffsstrategie festgelegten Art und Weise angesteuert. Je nach Zugriffsstrategie ordnet der Speichercontroller 3 einem Adressplatz, der beispielsweise 32 Bit langen Adresse des Mikrocontrollers, eine unterschiedliche Bank,- Spalten- oder Reihenadresse zu (Adressmapping). Anschließend gibt der Speichercontroller 3 bei Programmpunkt 40 das Datum der Adresse x, y über die erste Schnittstelle 2 an den Mikroprozessor 1 aus.

Die Steuereinheit 6 bearbeitet bei Programmpunkt 20 gleichzeitig die Aufgabe, die der Mikroprozessor bearbeitet. Zeitlich parallel zu der Abarbeitung der Programmpunkte 20 bis 40 berechnet die Steuereinheit 6 die Zeit, die für die Aufgabe benötigt wird, wenn die Aufgabe nach einer zweiten Zugriffsstrategie aus dem Speicher 5 ausgelesen wird. Die zweite Zugriffsstrategie ist im zweiten Speicher 7 abgelegt und wurde von der Steuereinheit 6 aus dem zweiten Speicher 7 ausgelesen. Die Steuereinheit 6 nutzt zur Wandlung einer Adresse a des Mikroprozessors 1 unterschiedliche Strategien aus und ermittelt somit die Adressen x₂, y₂ im Speicher 5. Gleichzeitig misst die Steuereinheit 6 die Zeit, die der Speichercontroller 3 zur Abarbeitung der vom Mikroprozessor 1 vorgegebenen Aufgabe nach der ersten Zugriffsstrategie benötigt. Die benötigte Zeit wird vorzugsweise über eine Vielzahl von Datenzugriffen auf den Speicher 5 gemittelt.

Beim folgenden Programmpunkt 50 vergleicht die Steuereinheit 6 die vom Speichercontroller 3 benötigte Zeit für die Abarbeitung der Aufgabe mit der von der Steuereinheit 6 berechneten Zeit für die Abarbeitung der Aufgabe nach der zweiten Zugriffsstrategie. Ergibt der Vergleich bei Programmpunkt 50, dass die zweite Zugriffsstrategie die Abarbeitung der Aufgabe in einer kürzeren Zeit ermöglicht, so wird bei Programmpunkt 60 von der Steuereinheit 6 die zweite Zugriffsstrategie im zweiten Programmspeicher 7 als Zugriffsstrategie abgelegt, die bei der Abarbeitung der entsprechenden Aufgabe vom Speichercontroller 3 in Zukunft verwendet wird. Die langsamere, erste Zugriffsstrategie wird im zweiten Programmspeicher 7 in einer Ausschlussliste mit der Angabe der Aufgabe abgelegt, bei der die Zugriffsstrategien verglichen wurden.

Ergibt die Abfrage bei Programmpunkt 50, dass die vom Mikroprozessor 1 vorgegebene Aufgabe mit der ersten Zugriffsstrategie schneller als mit der zweiten Zugriffsstrategie abgearbeitet werden kann, so bleibt die Vorgabe der ersten Zugriffsstrategie für die vorgegebene Aufgabe unverändert im zweiten Programmspeicher 7 abgelegt. Anschließend wird zu Programmpunkt 10 zurückverzweigt. Anstelle der Schnelligkeit können auch andere Eigenschaften wie z. B. der Stromverbrauch überprüft werden und die Zugriffsstrategie ausgewählt werden, die eine in Bezug auf die überprüfte Eigenschaft bessere Abarbeitung der Aufgabe ermöglicht.

Ein Ausführungsbeispiel der Erfindung wurde an der Aufgabe Auslesen eines Datums erläutert. Der Mikroprozessor 1 kann jedoch auch weitere Aufgaben wie z. B. Einschreiben eines Datums an eine vorgegebene Speicheradresse oder Kopieren eines Datums von einer ersten Speicheradresse in eine zweite Speicheradresse oder Löschen eines Datums an einer vorgegebenen Speicheradresse vorgeben. Die Aufzählung der Aufgaben ist nicht abschließend und kann je nach Anwendungsfall beliebige Operationen im Speicher 5 betreffen.

Die Zugriffsstrategien, die im zweiten Programmspeicher 7 abgelegt sind, unterscheiden sich beispielsweise darin, dass nach jedem Auslesen eines Datums aus einer Speicheradresse die entsprechende Bankleitung 15 und die entsprechende Reihenleitung 14 weiterhin bestromt bleiben. Die Reihenleitung öffnet einen Auswahltransistor und startet das Auslesen der gespeicherten Information, wobei die gespeichert Information erst nach Auswahl der Spaltenleitung abgerufen werden kann. Eine andere Zugriffsstrategie besteht beispielsweise darin, dass nach dem Auslesen eines Datums aus einer Speicheradresse die entsprechende Bankleitung 15, die entsprechende Spaltenleitung 13 und die entsprechende Reihenleitung nicht mehr angesteuert werden. Bei dieser Zugriffsstrategie werden die Spaltenleitung, die Reihenleitung und die Bankleitung erst dann wieder angesteuert, wenn eine entsprechende Aufgabe vom Mikroprozessor 1 vorgegeben wird. Im Gegensatz dazu hat die erste Zugriffsstrategie den Vorteil, dass bei gleicher Bankadresse und bei gleicher Reihenadresse nur noch die entsprechende Spaltenleitung aktiviert werden muss, um ein Datum auslesen zu können. Sollte sich jedoch auch die Bankadresse und die Reihenadresse ändern, so muss erst die bisherige Bankleitung und die bisherige Reihenleitung abgeschaltet werden und eine neue Bankleitung und eine neue Reihenleitung angesteuert werden. Somit haben die verschiedenen Zugriffsstrategien je nach Art und Weise der aufeinanderfolgenden Zugriffe auf die Speicherzellen des Speichers 5 Vor- oder Nachteile. Werden beispielsweise Daten vorwiegend mit der gleichen Bankadresse und der gleichen Reihenadresse ein- oder ausgelesen, so ist die erste Zugriffsstrategie schneller. Werden jedoch aufeinanderfolgend Daten häufig mit unterschiedlicher Bank- und Reihenadresse ein- oder ausgelesen, so ist die zweite Zugriffsstrategie schneller. Grundsätzlich wird die Schnelligkeit einer Zugriffsstrategie über eine Vielzahl von Zugriffen ermittelt und stellt somit ein statistisches Mittel der Schnelligkeit dar, mit der der Mikroprozessor 1 Daten vom Speichercontroller 3 erhält.

Ein wesentlicher Kern der Erfindung besteht darin, dass die vom Speichercontroller 3 verwendete Zugriffsstrategie auf die Art der Aufgaben angepasst wird, die vom Mikroprozessor 1 dem Speichercontroller 3 vorgegeben wird. Auf diese Weise ist eine Optimierung der Zugriffsstrategie an die auszuführenden Aufgaben möglich. Somit wird insgesamt das Bearbeiten von Daten im Speicher 5 und die Abarbeitung von Aufgaben im Mikroprozessor 1 verbessert.

Als weitere Zugriffsstrategie kann beispielsweise eine unterschiedliche Anordnung der Daten im Speicher vorgenommen werden. Der Mikroprozessor 1 gibt eine Speicheradresse an, die vom Reihen- und Spaltendekoder in eine physikalische Speicheradresse umgesetzt wird. Je nach Anwendungsfall kann es von Vorteil sein, Speicheradressen, die vom Mikroprozessor 1 häufig nacheinander vorgegeben werden, physikalisch auf einer Reihenleitung anzuordnen. Dies bietet den Vorteil, dass bei aufeinander folgenden Abfragen der Daten die Reihenleitung angesteuert bleiben kann und nur die Reihenleitung verändert werden muss. Somit ist ein schnelleres Auslesen der Daten möglich.

Es ist eine Vielzahl von Zugriffsstrategien möglich, die vom Fachmann in entsprechender Weise ausgewählt werden.

Figur 4 zeigt eine erste, zweite und dritte Liste 18, 19, 20, die im zweiten Programmspeicher 7 abgelegt sind. In der ersten Liste 18 ist verschiedenen Aufgaben eine Zugriffsstrategie zugeordnet. Muss beispielsweise der Speichercontroller 3 die Aufgabe 1 abarbeiten, so wird ihm die Strategie A als Zugriffsstrategie vorgegeben. Muss der Speichercontroller 3 die Aufgabe 2 abarbeiten , so wird ihm die Strategie C als Zugriffsstrategie vorgegeben. Wie oben beschrieben kann die Zuordnung der Aufgaben zu den Zugriffsstrategien durch die Steuereinheit 6 verändert werden. Auf diese Weise ist eine laufende Adaption der optimalen Zugriffsstrategie möglich.

In der zweiten Liste 19 sind verschiedene Zugriffsstrategien A, B, C usw. abgelegt, aus denen sich die Steuereinheit 6 eine Zugriffsstrategie auswählt, um eine Vergleichsrechnung zur Bestimmung der zur Abarbeitung einer vorgegebenen Aufgaben benötigten Zeit oder des Stromverbrauches vorzunehmen.

In einer bevorzugten Ausführungsform greift die Steuereinheit 6 statistisch auf die in der zweiten Liste 19 abgelegten Strategien in vorgegebenen Zeitpunkten zu und berechnet parallel zu einer vom Mikroprozessor 1 vorgegebenen Aufgabe die Zeit oder den Stromverbrauch für die Abarbeitung der Aufgabe nach der ausgewählten Zugriffsstrategie aus.

In einer bevorzugten Ausführungsform der Erfindung ist für jede vom Mikroprozessor 1 vorgegebene Aufgabe eine dritte Liste 20 im zweiten Programmspeicher 7 abgelegt, in der die Zugriffsstrategien abgelegt sind, die die Steuereinheit 6 für einen bestimmte Aufgabe bereits als schlechter erkannt hat. Die dritte Liste 20 stellt eine Ausschlussliste dar, die den Vorteil aufweist, dass die Steuereinheit 6 nicht immer alle möglichen Zugriffsstrategien der zweiten Liste 19 überprüft, sondern nur die Zugriffsstrategien der zweiten Liste 19 für die vorgegebene Aufgabe überprüft, die nicht in einer dritten Liste 20 der entsprechenden Aufgabe abgelegt sind. Auf diese Weise wird eine effiziente Auswahl der optimalen Zugriffsstrategie ermöglicht.

Vorzugsweise wird die Vergleichsberechnung der Steuereinheit 6 in Echtzeit parallel zur Abarbeitung der Aufgabe durch den Speichercontroller 3 ausgeführt. In einer bevorzugten Ausführungsform wird eine von der Steuereinheit 6 als bessere Zugriffsstrategie ermittelte Zugriffsstrategie erst bei einem neuen Systemstart oder Programmstart vom Speichercontroller 3 verwendet.

Die Erfindung wurde an dem Beispiel erläutert, bei dem die Zugriffsstrategien in Bezug auf Schnelligkeit überprüft wurden. Der Vergleich der Zugriffsstrategien kann jedoch auch auf andere Ergebnisse hin durchgeführt werden, Beispielsweise kann die Zugriffsstrategie als besser ausgesucht werden, bei der eine geringere Erwärmung oder ein geringerer Stromverbrauch des Speichers 5 auftritt.

In einer bevorzugten Ausführungsform ist die Steuereinheit 6 nur an die erste Schnittstelle 2 angeschlossen und erfasst die Aufgaben, die dem Speichercontroller 3 zur Abarbeitung vorgegeben werden. Die Steuereinheit 6 misst die Zeit, die der Speichercontroller 3 zur Abarbeitung der Aufgaben benötigt. Zudem berechnet die Steuereinheit 6 bei bekannten Abarbeitungszeiten die Zeit, die zur Ausführung der Aufgaben mit einer anderen Zugriffsstrategie benötigt würde. In einer Weiterbildung simuliert die Steuereinheit 6 die Zeit, die zur Abarbeitung der Aufgaben mit einer anderen Zugriffsstrategie benötigt würde.

Bei der Überprüfung der Abarbeitung der Aufgaben arbeitet die Steuereinheit 6 in einer bevorzugten Ausführungsform die Aufgaben in einer ausgewählten Zugriffsstrategie ab, d. h. die Steuereinheit 6 bearbeitet Daten im Speicher 5 und/oder setzt die vom Mikroprozessor vorgegebenen Adressen in physikalische Adressen mit einer Ansteuerung des Bank-, Spalten- und Reihendekoders 12, 13, 14 um. Gleichzeitig misst die Steuereinheit 6 die Zeit, die zur Abarbeitung der Aufgaben benötigt wird. Anschließend vergleicht die Steuereinheit 6 die Zeit, die der Speichercontroller 3 mit der ersten Zugriffsstrategie zur Abarbeitung der Aufgabe benötigte mit der Zeit, die die Steuereinheit 6 zur Abarbeitung der Aufgabe mit der ausgewählten Zugriffsstrategie benötigt.

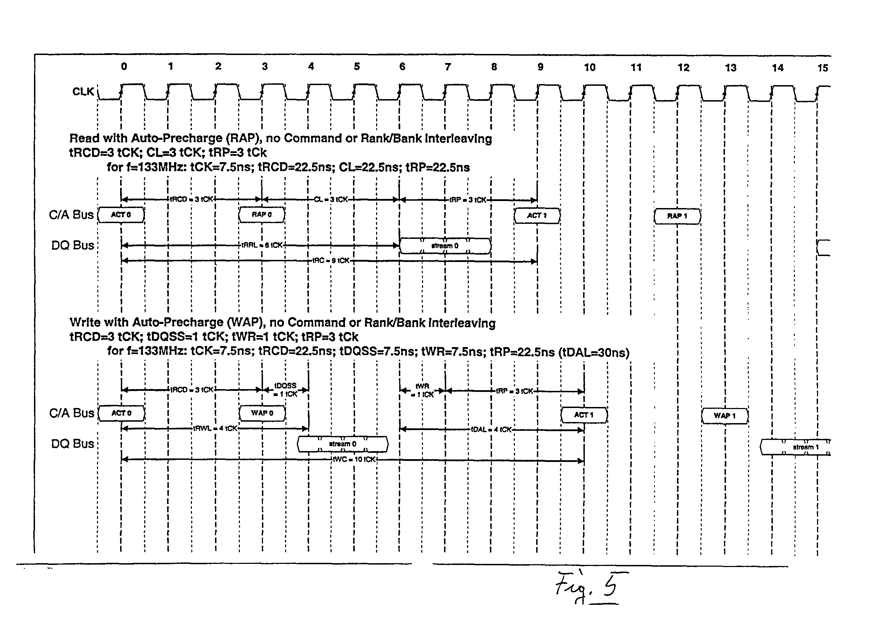

In Figur 5 ist ein Ausführungsbeispiel dargestellt. Dabei werden folgende Abkürzungen verwendet:
- ACT: Befehl zum Öffnen einer Bank in einem DRAM (Activate)
- RAP: Befehl zum Lesen von Daten mit anschließendem, automatischen Schließen der Bank, von der gelesen wird (Read Auto Precharge).
- WAP: Befehl zum Schreiben von Daten mit anschließendem, automatischen Schließen der Bank, auf die geschrieben wird (Write Auto Precharge).
- tRCD: Verzögerungszeit, die zwischen einem ACT-Befehl und einem RAP-Befehl bzw. zwischen einem ACT-Befehl und einem WAP-Befehl liegen muss.
- CL: Zeit, die vergeht zwischen dem Senden des RAP-Befehls und dem Empfangen der Daten, die vom DRAM ausgelesen werden.
- BL: Anzahl der Datenworte, die mit einem einzigen Lese- oder Schreibbefehl übertragen werden (Burst Length)
- tRP: Zeit, die notwendig ist, um eine Bank zu schließen (Row Precharge)
- tDQSS: Zeit, die vergeht zwischen dem Senden des WAP-Befehls und dem Senden der Daten, die in das DRAM geschrieben werden sollen.
- tWR: Zeit, die vergeht, damit das DRAM die Daten, die geschrieben werden sollen, vom Interface in das Speicherzellenfeld transferiert (Write Recovery)
- tDAL: = tWR + tRP: Zeit, die vergeht, damit das DRAM die Daten, die geschrieben werden sollen, vom Interface in das Speicherzellenfeld transferiert und anschließend die Bank, auf die geschrieben wird, schließt.

- tRRL =: tRCD + CL: Zeit, die vergeht zwischen dem Senden des ACT-Befehls und dem Empfangen der Daten (Random Read Latency)
- tRC =: tRCD + CL + tRP: Zeit, die notwendig ist, um einen gesamten Lesezyklus abzuarbeiten (Read Cycle)
- tRWL =: tRCD + tDQSS: Zeit,die vergeht zwischen dem Senden des ACT-Befehls und dem Senden der Daten an das DRAM (Randon Write Latency)
- tWC =: tRCD + tDQSS + BL/2 + tDAL: Zeit, die notwendig ist, um einen gesamten Schreibzyklus abzuarbeiten (Write Cycle)

### Beschreibung des Ausführungsbeispiels:

Es wird davon ausgegangen, dass folgende Zugriffsstrategie im "passiven Emulator" des Speicherkontrollers, d.h. in der Steuereinheit 6 emuliert wird:
Zuerst wird folgende Aufgabe emuliert:
"Lesen und Schreiben mit automatischem Schließen der Bank, ohne die Kommandos oder die Bänke ineinanderzuschachteln" (Read/Write with Auto-Precharge, no Command and/or Bank interleaving).
Die zugehörigen Abläufe, die zum Lesen bzw. Schreiben von Daten zu einem Speicher notwendig sind, sind in der beigefügten Abbildung beispielhaft für sogenannte DDR-DRAMs (Double-Data-Rate DRAMs) dargestellt.
Lesen: Empfängt der Speichercontroller eine Leseanforderung, so sind folgende Einzelschritte notwendig:
1. Öffne eine bestimmte Seite in einer bestimmten Bank im DRAM, von der gelesen werden soll.
2. Schicke einen Lesebefehl mit der Spaltenadresse, von der gelesen werden soll.
3. Warte eine bestimmte Zeit, bis die Daten vom DRAM in den Controller eingelesen werden können.
4. Warte eine bestimmte Zeit, bis die Datenübertragung vom DRAM in den Controller abgeschlossen ist.
5. Warte eine weitere bestimmte Zeit, bis die Bank im DRAM, von der gelesen wurde, wieder geschlossen ist.
Schreiben: Empfängt der Speichercontroller eine Schreibanforderung, so sind folgende Einzelschritte notwendig:
1. Öffne eine bestimmte Seite in einer bestimmten Bank im DRAM, in die geschrieben werden soll.
2. Schicke einen Schreibbefehl mit der Spaltenadresse, in die geschrieben werden soll.
3. Warte eine bestimmte Zeit, bis die Daten vom Controller zum DRAM gesendet werden können.
4. Warte eine weitere bestimmte Zeit, bis die Datenübertragung zum DRAM abgeschlossen ist.
5. Warte eine weitere bestimmte Zeit, bis die Daten vom Interface des DRAMs in das DRAM-Zellenfeld übertragen ist.
6. Warte eine weitere bestimmte Zeit, bis die Bank im DRAM, in die geschrieben wurde, wieder geschlossen ist.

Mit der hier beschriebenen Zugriffsstrategie ist die Steuereinheit 6 also in der Lage, zu emulieren bzw. zu berechnen, wie lange die einzelnen Lese- bzw. Schreibanforderungen dauern. In der hier vorgestellen, einfachen Zugriffsstrategie ist es nicht zwingend erforderlich, die Lese- und Schreibzugriffe tatsächlich hardwaremäßig zu emulieren. Es wäre auch möglich, dass die Steuereinheit 6 einfach folgende Zeiten annimmt:
1. Die Random Read Latency beträgt tRRL.
2. Ein kompletter Lesezyklus dauert tRC.
3. Die Random Write Latency beträgt tRWL.
4. Ein kompletter Schreibzyklus dauert tWC.
Allerdings ist es einsichtig, das jegliche Zugriffsstrategie, die etwas komplexer ist als die hier beschriebene, nicht mehr einfach mit 4 Parametern (tRRL, tRC, tRWL, tWC) beschrieben werden kann. Beispiele für komplexere Zugriffstrategieen sind z. B.:
- Die Speicherbänke werden nicht sofort nach jedem Lese- oder Schreibzugriff geschlossen, sondern unter Zuhilfenahme bestimmter, hier nicht näher beschriebener Algorithmen für eine bestimmte Zeit offengehalten (Bank Interleaving).
- Die Befehle, die sich auf verschiedene Speicherbänke beziehen, können ineinander verschachtelt werden, so dass nicht tRC oder tWC gewartet werden muss, bis ein ein weiterer Zugriffszyklus gestartet werden kann (Command Interleaving).

Da die Kombinationen bzgl. Bank- und Command-Interleaving nahezu beliebig komplex gestaltet werden können, ist es vorteilhaft, den Schaltungsblock, mit dem die tatsächlichen Speicherzugriffe durchgeführt werden in einer zweiten Ausführung der Steuereinheit 6 zur Verfügung zu stellen. Die Steuereinheit 6 kann dann alternative Zugriffsstrategieen emulieren, die dann mit den Performancewerten des Speichercontrollers 3 verglichen werden.
Es ist aber auch möglich, andere oder neue Zugriffsstrategieen zu implementieren, die dann mit den Zugriffsstrategien des Speichercontrollers 3 verglichen werden können.

Unter einer Emulation wird die Nachbildung einer Hardwarefunktion mit Software verstanden. In dem beschriebenen Ausführungsbeispiel werden die Hardwarekomponenten, die zum Lesen und/oder Schreiben eines Datums im DRAM-Speicher verwendet werden in Form von Software nachgebildet. Auf diese Weise ist eine realistische Simulation der Funktionsweise des DRAM-Speichers möglich.

## Patentansprüche

1. Verfahren zum Bearbeiten von Daten in einem Speicher (5), wobei die Daten nach einer vorgegebenen ersten Zugriffsstrategie im Speicher (5) bearbeitet werden, wobei überprüft wird, ob die Bearbeitung der Daten mit einer anderen, vorgegebenen Zugriffsstrategie besser durchgeführt werden kann, **dadurch gekennzeichnet, dass** zum Vergleich die zweite Zugriffsstrategie in Echtzeit mit der ersten Zugriffsstrategie berechnet oder emuliert wird.

2. Verfahren nach Anspruch 1, **dadurch gekennzeichnet, dass** die schlechtere Zugriffsstrategie in eine Liste (20) eingeschrieben wird, und dass die Zugriffsstrategien der Liste (20) nicht mehr für eine Überprüfung verwendet werden.

3. Verfahren nach einem der Ansprüche 1 oder 2, **dadurch gekennzeichnet, dass** in vorgebbaren Zeitpunkten eine neue Zugriffsstrategie aus einem Speicher (7) ausgelesen wird und mit der neuen Zugriffsstrategie eine Überprüfung durchgeführt wird.

4. Verfahren nach einem der Ansprüche 1 bis 3, **dadurch gekennzeichnet, dass** eine Bearbeitung der Daten ein Auslesen oder Einschreiben von Daten in den Speicher (5) darstellt.

5. Verfahren nach einem der Ansprüche 1 bis 4, **dadurch gekennzeichnet, dass** verschiedene Arten von Bearbeitungen durchgeführt werden, dass in einem Speicher (7) für mindestens einen Teil der Arten jeweils eine Zugriffsstrategie abgelegt ist, nach der die Art der Bearbeitung durchgeführt wird.

6. Verfahren nach einem der Ansprüche 1 bis 5, **dadurch gekennzeichnet, dass** sich verschiedene Zugriffsstrategien in der Art der Ansteuerung von Steuerleitungen (13, 14, 15) des Speichers (5) unterscheiden.

7. Verfahren nach einem der Ansprüche 1 bis 6, **dadurch gekennzeichnet, dass** eine Bearbeitung das Umsetzen von vorgegebenen Speicheradressen in physikalische Speicheradressen darstellt.

8. Verfahren nach einem der Ansprüche 1 bis 7, **dadurch gekennzeichnet, dass** eine Überprüfung über eine Vielzahl von Bearbeitungen erfolgt und vorzugsweise eine bessere Bearbeitung eine schnellere Bearbeitung darstellt.

9. Vorrichtung zum Bearbeiten von Daten in einem Speicher (5),
mit einem Mikroprozessor (1),
mit einer Steuereinheit (6),
mit einem Speichercontroller (3), wobei die Steuereinheit (6) und der Speichercontroller (3) über eine erste Schnittstelle (2) mit dem Mikroprozessor (1) verbunden sind, wobei der Speichercontroller (3) Daten nach einer vorgegebenen ersten Zugriffsstrategie im Speicher (5) bearbeitet,
wobei
die Steuereinheit (6) überprüft, ob die Bearbeitung der Daten mit einer anderen Zugriffsstrategie besser, vorzugsweise schneller durchgeführt werden kann,
**dadurch gekennzeichnet, dass** die Steuereinheit (6) das Bearbeiten der Daten nach einer zweiten Zugriffsstrategie emuliert und
dass die Steuereinheit (6) ermittelt, mit welcher Zugriffsstrategie die Daten besser bearbeitet werden.

10. Verfahren nach Anspruch 9, **dadurch gekennzeichnet, dass** die Steuereinheit (6) dem Speichercontroller (3) die bessere Zugriffsstrategie zum weiteren Bearbeiten von Daten vorgibt.

11. Vorrichtung nach einem der Ansprüche 9 oder 10, **dadurch gekennzeichnet, dass** ein Speicher (7) vorgesehen ist, der an das Steuergerät (6) angeschlossen ist, und dass im Speicher (7) Zugriffsstrategien abgelegt sind.

12. Vorrichtung nach einem der Ansprüche 9 bis 11, **dadurch gekennzeichnet, dass** ein Speicher (7) vorgesehen ist,
dass im Speicher (7) für verschiedene Arten von Bearbeitungen verschiedene Zugriffsstrategien abgelegt sind, die der Speichercontroller (3) bei der Durchführung der verschiedenen Arten der Bearbeitung verwendet.
